Europäisches Patentamt

European Patent Office

Office européen des brevets

(19)

(11) **EP 0 727 578 B1**

(12) **EUROPEAN PATENT SPECIFICATION**

(45) Date of publication and mention
of the grant of the patent:
**19.12.2001 Bulletin 2001/51**

(51) Int Cl.[7]: **F02P 5/155**, F02P 9/00,
F02P 1/08

(21) Application number: **96101816.5**

(22) Date of filing: **08.02.1996**

(54) **Inductive ignition system for internal-combustion engines with electronically controlled spark advance**

Induktives Zündsystem für innere Brennkraftmaschinen mit einem elektronisch gesteuerten Zündzeitpunkt

Système d'allumage inductif pour moteurs à combustion interne avec contrôle électronique de l'avance à l'allumage

(84) Designated Contracting States:
**AT DE ES FR IT SE**

(30) Priority: **15.02.1995 IT MI950278**

(43) Date of publication of application:
**21.08.1996 Bulletin 1996/34**

(73) Proprietor: **DUCATI ENERGIA S.p.A.**
**40132 Bologna (IT)**

(72) Inventors:
• **Regazzi, Gianni**
**I-40128 Bologna (IT)**

• **Baldoni, Beniamino**
**I-40129 Bologna (IT)**

(74) Representative: **Coloberti, Luigi**
**Via E. de Amicis No. 25**
**20123 Milano (IT)**

(56) References cited:
**EP-A- 0 193 506**      **US-A- 4 462 356**
**US-A- 4 515 118**

• **PATENT ABSTRACTS OF JAPAN vol. 011, no. 071 (M-567), 4 March 1987 & JP 61 226568 A (MITSUBISHI ELECTRIC CORP), 8 October 1986,**

## Description

The present invention relates to an inductive-ignition system for internal-combustion engines, provided with an electronically controlled spark advance, particularly suitable for low-powered one-cylinder engines, such as for example those used in lawn-mowers, chain saws and similar devices.

As is known, an ignition system for internal-combustion engines substantially comprises a voltage generator including a magnetic rotor and a stator defining a flow path for the magnetic flux linked to an ignition coil, the primary winding of which is inductively coupled to a secondary winding connected to a spark plug. An electronic current control switch is normally arranged in the circuit of the primary winding to suddenly break the flow of the current at the time when ignition occurs, causing a high inductive voltage generation in the secondary winding of the ignition coil suitable for generating an ignition spark for the fuel mixture inside the engine; a suitable control circuit for the main electronic switch allows the current to be suddenly interrupted at the time when ignition occurs. In such an ignition circuit, the spark in the engine can occur only at the time when the current flowing in the primary winding of the ignition coil is close to its maximum value. An ignition system of this type is described for example in US-A-4,188,929.

In low-powered engines it would be desirable, however, to considerably advance the time at which the ignition occurs with respect to the top dead centre of the piston stroke, so as to ensure that, during start-up at a low number of revolutions, optimum ignition conditions exist without negatively influencing ignition at a higher runnings.

An inductive ignition system for low-powered engines is described for example in US-A-4.515.118, in which an ignition switch is directly connected to the primary winding of an ignition coil, and to a control output of a microprocessor, to control the circulation of the current at the sparking, in dependence of the speed of the engine; the inlet side of the microprocessor is connected to a voltage supply circuit for supplying a voltage to the microprocessor at low speed and over the entire speed range of the engine, and to trigger the ignition switch for sparking during positive half-waves of the current flowing in the primary winding of the ignition coil.

Inductive ignitions of the kind referred to above have the drawback, however, that it is not possible to change the spark advance time, except by a few degrees, for example about 6 to 8 degrees, without adversely affecting the performance, since excessively advancing the time when ignition occurs would result in a breakage at lower values of the primary current and, consequently, the generation of voltages on the secondary winding, having a value less than that required for generating the spark in the spark plug. Furthermore, it is desirable that the time length of the spark should be particularly long, to improve the combustion in the engine.

The use of conventional capacitive-discharge ignitions, while attempting to solve the problem of the ignition advance, does not solve said problem in an adequate manner since these types of ignition have a particularly short time length for the spark which is not suitable for all those combustion engines of low fuel consumption type.

In order to obtain a shifting of the spark advance in an inductive ignition system of the known type, it has also been proposed to provide a double diode bridge between the primary winding of the ignition coil and the main electronic control switch, the conduction of which is inhibited upon reaching a voltage and a current threshold of a predetermined value on the control electrode of said main electronic switch.

In a system with such an arrangement, the generation of the spark at low running of the engine can again occur at a point close to the maximum value of the negative half-wave of the current rectified by the diode bridge, which usually has values higher than those of the initial and final half-waves of the generator. Since, when the speed of the engine increases, the voltage in the primary circuit also increases, the threshold value of the primary discharge current will be reached in advance, in correspondence with the first positive half-wave generated by the circuit. In this way, the timing of the ignition advance depends on the rotational speed or running of the engine.

Although this solution enables shifting of the spark advance to be obtained at a predetermined speed, it nevertheless has problems mainly due to the fact that the shifting time for the spark advance is still depending on the current flowing in the primary winding of the ignition coil and consequently to the performance of the entire system. Since this current does not increase in a linear manner with the speed and beyond a certain value does not increase practically at all, it is clearly difficult to establish, as required, the speed at which the shifting of the spark advance occurs; furthermore, voltage drops caused by the diodes of the rectifier bridge and by the main current control switch as well as by the resistor generating the trigger signal have a negative effect on the high-voltage performance of the circuit, in particular at low running of the engine.

The object of the present invention is to provide an inductive-ignition system for small combustion engines provided with electronically controlled spark advance means, in which the shifting of the spark advance timing, hereinafter referred to as "spark advance" is no longer dependent upon the current circulating in the primary winding of the ignition coil, eliminating at the same time certain negative influences of the voltage generator and the temperatures on the voltage triggering the spark advance.

A further object of the present invention is to provide an inductive-ignition system for low-powered internal combustion engines, as defined above, by means of which it is possible to increase considerably the time length of the spark, thus improving the ignition conditions.

Yet another object of the present invention is to provide an inductive-ignition system by means of which it is possible to obtain a limitation in the maximum number of revolutions of the engine by means of the same ignition system.

These and other objects of the invention can be achieved by an inductive ignition system having the features of the claim 1; other features are described in the dependent claims.

The invention will be illustrated more clearly hereinbelow with reference to the accompanying drawings, in which:

Fig. 1 is a view of a voltage magneto generator comprising the inductive ignition system according to the invention;

Fig. 2 is a view, on a larger scale, along the line 2-2 of Figure 1;

Fig. 3 is a wiring diagram of the inductive ignition system according to the invention;

Fig. 4 shows the graph of the current flowing in the primary winding of the ignition coil;

Fig. 5 shows the graph of the voltage signals of the two magnetic pick-ups which control the spark advance timing at different running speeds of the engine;

Fig. 6 shows a variation of the circuit shown in Figure 3;

Fig. 7 is a wiring diagram of a further embodiment of the ignition system according to the invention;

Figs. 8 to 15 show a series of graphs of the most significant voltages and control signals of the circuit according to Figure 7.

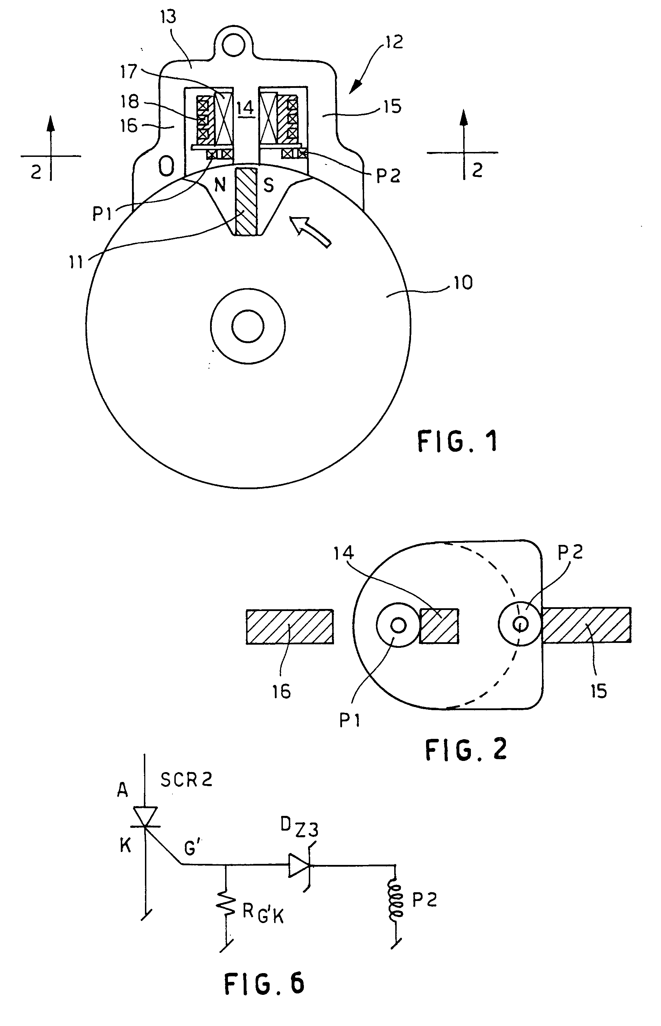

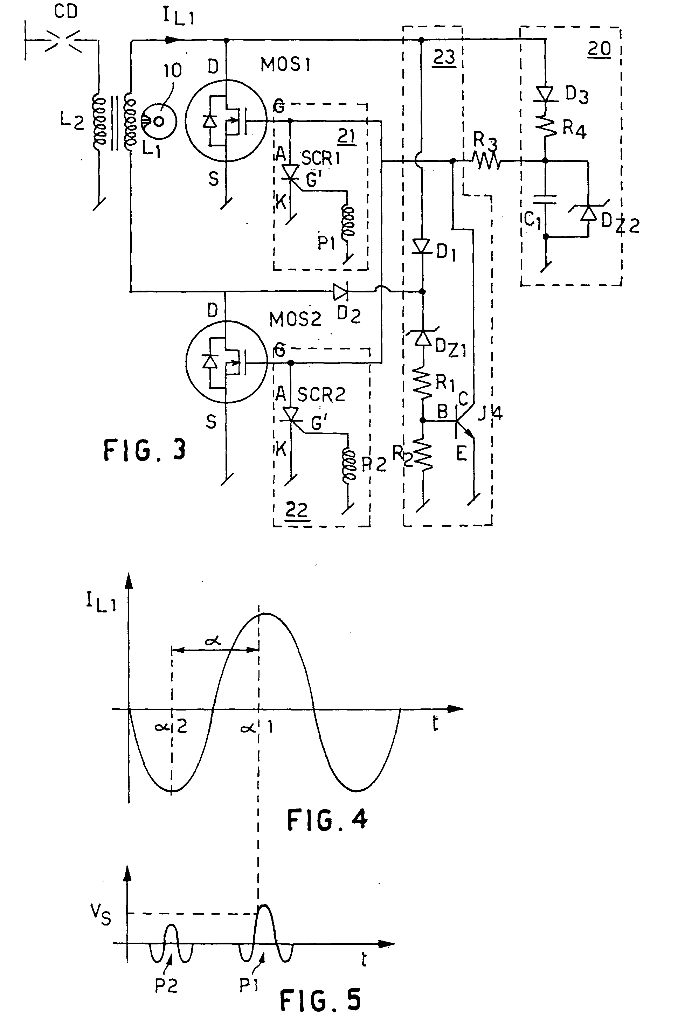

With reference to Figure 1, the voltage magneto generator is designed to generate, at each revolution of the rotor, a first negative half-wave, followed by a second positive half-wave of greater amplitude, which is followed by a third negative half-wave substantially similar to the first negative half-wave to cause a current to flow in the primary winding of an ignition coil, as shown in Figure 4. Therefore, the generator comprises a magnetic rotor 10 provided with a radially extending permanent magnet 11 polarized in the cross direction, having the opposite poles arranged between two pole shoes N and S facing the periphery of the same rotor 10.

The magneto generator moreover, comprises, a stator 12 consisting of a pack 13 of magnetic laminations defining a circuit for the magnetic flux, comprising a central leg 14 and two lateral legs 15, 16 which are angularly spaced and arranged in the rotational direction of the rotor 10.

The central leg 14 has arranged around it an ignition coil comprising a primary winding 17 linked to the flux flowing in the magnetic system; the primary winding 17 is in turn inductively coupled to a secondary winding 18 or high-voltage winding which supplies power to a spark plug CD (Fig. 3).

The primary winding 17, as shown in Figure 3, is connected to an inductive ignition circuit comprising electronically controlled spark advance means according to the present invention. This circuit, as explained further below, comprises a first magnetic pick-up P1 designed to emit a first control signal for triggering the ignition at a minimum revolution number of the engine, for example at start-up, which is shifted to provide a spark with a certain delay with respect to a second magnetic pick-up P2 designed to generate, with a certain advance compared to the former, a second control signal which reaches the ignition trigger threshold at a predetermined number of revolutions higher than the former one, during normal working of the engine; the difference between the two instants, equivalent to the angle $\alpha$ of rotation of the rotor 10, represents the shifting in the spark advance.

The two magnetic pick-ups P1 and P2, as explained further below, must therefore have a phase displacement angle equal to the required ignition advance $\alpha$; furthermore, their position must be chosen to be as close as possible to the maximum tearing point for the magnetic flux, as for example shown in Figure 1, where the magnetic pick-up P1 is positioned in the vicinity of the central leg 14 of the stator, while the magnetic pick-up P2 is positioned in the vicinity of the lateral leg 15 which precedes the central leg 14 in the rotational direction of the rotor 10.

With reference to Figure 3 we shall now describe a preferred embodiment of the inductive ignition system with electronically controlled spark advance according to the present invention.

In Figure 3, L1 denotes inductance of the primary winding 17 of the ignition coil of the generator shown in Figure 1, while L2 denotes the inductance of the secondary winding 18 connected to the spark plug CD.

The system comprises first and second main electronic control switches for controlling the primary current in the winding 17 which, in the specific case, consists of two MOS-FETs indicated by MOS1 and MOS2 in Figure 3; it is obvious, however, that any other electronic control switch or circuit arrangement equivalent to a MOS circuit of figure 3 is suitable for the purposes of the present invention.

The two main electronic control switches MOS1 and MOS2, consisting of two power high-voltage MOS switches for example of about 400 volts, are connected via their drain D to the opposite terminals of the primary winding L1, while their sources S are connected to earth so as to control the flow of the primary current circulating in the winding L1. The gate G of both MOS switches is connected, via a resistor R3, to a feed circuit 20 designed to generate a supply voltage having a value predetermined by the Zener diode DZ2, for polarization of the control electrodes G of both the switches MOS1 and MOS2. In fact, as is known, the two MOS have at their input a high-value impedance and, in order to start conducting, i.e. in order to have a low resistance between their drain D and their source S, they must be polarized between the gates G and the source S with at least 4 volts which represents the threshold value of the voltage $V_{GS}$ between G and S. Therefore, as shown in Figure 3, the feed circuit 20 which polarizes the gates G of the two main switches must provide a voltage with a value greater than the threshold voltage mentioned above (for example 12 volts). The feed circuit 20 comprises a capacitor C1, the voltage of which is limited by the Zener diode DZ2; the capacitor C1 is connected to the gates G of the two main switches MOS1 and MOS2, via the resistor R3, while it is supplied with current by the primary winding L1 via the resistor R4 and the diode D3 during the positive half-wave.

The ignition system shown in Figure 3 comprises moreover a first circuit 21 for inhibiting MOS1 as well as a second circuit 22 for inhibiting MOS2, by which the circulation of the primary current is suddenly caused to stop at the times when the spark must be generated in the spark plug.

In particular, each inhibiting circuit 21, 22 comprises an electronic switch SCR1 and SCR2 designed to connect to earth the gate G of the MOS in order to inhibit the respective main switch MOS1 and MOS2; the control electrode G' of SCR1 and SCR2 is directly connected to the magnetic pick-up P1 and P2, respectively.

The system shown in Figure 3 comprises finally an holding circuit 23 for maintaining the inhibited state of the two main switches MOS1 and MOS2, which keeps the gates G connected to earth for the whole of the time during which voltage is generated in the primary winding L1 following the instant at which ignition sparks. This circuit 23 is necessary since the current which flows in R3 is unable to keep SCR1 and SCR2 in a conductive state.

The holding circuit 23 comprises moreover a transistor J4 having the collector-emitter circuit CE designed to connect to earth the power supply of the control electrodes G of the two main switches MOS1 and MOS2; the base B of the transistor J4 is polarized with a voltage signal supplied by the voltage divider R1, R2 connected to both sides of L1 via the Zener diode DZ1 and the two diodes D1 and D2 having a common cathode connection.

Operation of the inductive ignition system according to Figure 3 will now be explained briefly with reference to Figure 4 which shows the graph of the primary current $I_{L1}$ and Figure 5 which shows the graph of the voltages supplied by the two magnetic pick-ups P1 and P2 at low running speeds of the combustion engine, while the broken line indicates a threshold voltage value $V_S$ corresponding to the value $V_{G'K}$ at which SCR1 and SCR2 start to conduct, typically at 0.65 volts.

As mentioned above, α denotes the shifting angle for the advance of the ignition, corresponding to the angular difference between the two magnetic pick-ups P1 and P2 in the magnetic circuit of the stator 12; it is pointed out moreover that the pick-up P1 which is activated at a low number of revolutions has a large number of turns, while the pick-up P2 which is activated at a higher number of revolutions has a proportionally much smaller number of turns. Let us assume, for example, that the pick-up P1 has 600 turns and must be activated for example at 500 revolutions of the engine and the pick-up P2 must be activated for example at 4000 revolutions; the pick-up P2 must therefore have a number of turns which is proportionally reduced by the same ratio, i.e. 75 turns.

Returning to the diagram of Figure 3, when the voltage present at the terminals of the capacitor C1, limited by the Zener diode DZ2 has a value higher than the threshold $V_{GS}$, then the gates G of both MOS1 and MOS2 are polarized at the same voltage value and the two MOS switches are made to conduct. In these conditions the primary current generated by the ignition coil may flow across the primary winding L1 and the two main switches MOS1, MOS2; in particular when the current $I_{L1}$ is positive, it rises from the internal diode of MOS2, flows along L1 and flow to the earth via the drain D and the source S of MOS1, and vice versa when the current is in its negative half-wave. The waveform of the primary current is shown in the graph of Figure 4.

Therefore, at a low number of revolutions, when the pick-up P1 generates a triggering signal higher than the threshold voltage $V_S$, SCR1 starts conducting, thereby inhibiting MOS1; consequently, given the position of the pick-up P1 close to the maximum tearing point of the magnetic flux inside the stator, the primary current will be suddenly cut-off at the highest point of the positive half-wave, causing a high voltage peak in the primary L1 of the ignition coil and a high voltage on the secondary winding L2 which sparks on the spark plug CD.

The primary voltage peak, in addition to causing the spark on the spark plug CD, via the diode D3 and the resistor R4 keeps the capacitor C1 charged at the voltage value determined by the Zener diode DZ2; furthermore, via D1, DZ1, R1 and R2, it causes conduction of the transistor J4 of the holding circuit 23 which will keep MOS1 and MOS2 inhibited until the primary winding generates a voltage.

The instant when the ignition is caused to spark by the main switch MOS1 is indicated by α1 in Figure 4; the second switch MOS2 does not intervene since, during this phase, the voltage signal on the second magnetic pick-up P2 is lower than the threshold value VS, as indicated in Figure 5.

After this phase, the gates G of MOS1 and MOS2, via the resistor R3 which has a much higher ohmic value, for example of about 200 KOhms, are polarized again beyond the threshold voltage by a current supplied by the capacitor C1 which causes the two switches to assume the conductive state again. Since MOS1 and MOS2 have an inlet capacity for example of the order of 1000 PF, a few hundreds of microseconds will be needed in order to reach the desired threshold voltage.

When the rotational speed increases, the pulse generated by the pick-up P2 which is positioned in the region of the lateral leg 15 of the stator first occurring for the magnet 11, in the rotational direction of the rotor 10, namely at the highest point of the first negative peak of the current $I_{L1}$, will reach the value for triggering SCR2 at the instant $\alpha$2, causing again a cut-off of the current in the primary winding L1; this causes the generation of a spark which is phase-shifted by an angle $\alpha$ with respect to the advance angle of the pick-up P1, having a value equivalent to about $30 \pm 35°$.

At this point the transistor J4 starts to conduct again, keeping the two main switches MOS1 and MOS2 inhibited until L1 generates a voltage and hence the said primary winding will result open.

The variation in flow caused by rotation of the rotor 10 therefore produces on the secondary winding L2 of the ignition coil a voltage able to generate and maintain the spark for the entire angle comprised between the instant in which the pick-up generates its trigger signal for the spark and the instant in which said rotor will stop to induce voltage in the windings of the ignition coil.

When one of the two MOS is in the conductive state, its voltage drop between the drain D and the source S is less than the voltage value of Zener diode DZ1, thus the transistor J4 is prevented from conducting during the phase in which primary current is flowing in the two MOS.

From the above it is obvious that the rotational speed at which shifting of the ignition advance occurs depends on the number of turns of the pick-up P2; similarly the number of turns of the pick-up P1 determines the speed at which the high voltage starts to appear on the secondary winding L2, i.e. the "spark minimum".

The "spark minimum" speed is not very critical in terms of tolerance, provided that it is of a sufficiently low value, while in some applications a low tolerance is required for the speed value at which shifting of the spark advance occurs.

The tolerance at which shifting of the spark advance occurs depends in turn on the tolerances of the voltage $V_{G'K}$ of the controlled switch SCR2, typically 0.65 to 0.15 volts and the variation of said voltage $V_{G'K}$ according to the temperature, typically 2.5 m volt/°C, in addition to the mechanical and magnetic tolerances of the generator which may be kept to within acceptable values.

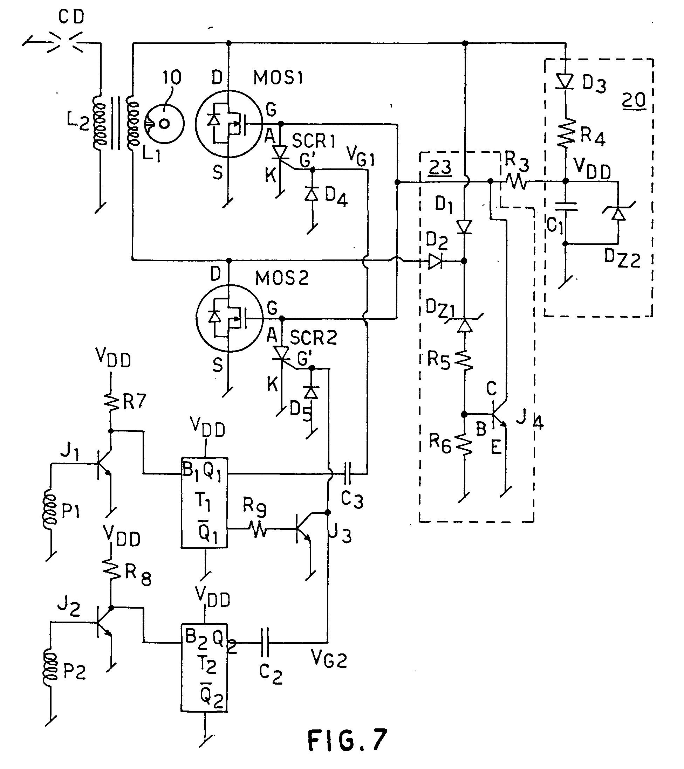

A way of ensuring acceptable the variations in the voltage $V_{G'K}$ between the control electrode G' and the cathode K of SCR2 is shown in Figure 6 of the accompanying drawings. In this Figure it can be noted that between the control electrode G' and the pick-up P2 there is arranged a Zener diode DZ3, typically of 6,2 volts, upstream of which a polarization resistor $R_{G'K}$ has been branched off, said resistor enabling the variations in the voltage $V_{G'K}$ of SCR2 to be limited to negligible values, the voltage of the Zener diode DZ3 being very precise, of the order of 1%, with a thermal derivative of opposite sign to that of the voltage $V_{G'K}$ of SCR2. In this case obviously the turns of the pick-up P2 must be suitably increased.

The invention therefore proposes a very simple and low-cost system for obtaining an inductive ignition with variation in the spark advance controlled electronically.

In the applications mentioned for this type of ignition, further functions are frequently required, such as for example limitation of the engine revolutions achieved by suppressing the spark at a predetermined running for example at 12,000 revolutions.

A possible solution to this problem is shown in the circuit diagram of Figure 7 in which parts similar or equivalent to those in the diagram of the preceding Figure 3 have been indicated by the same reference numbers.

In general the system according to Figure 7 still comprises a first main electronic switch MOS1 and a second main switch MOS2 connected to the primary winding L1 of the ignition coil, the control electrodes G of which are connected to the feed circuit 20 which provides a constant polarization voltage supplying also two timers T1 and T2 with the voltage $V_{DD}$. Similarly, in Figure 7, 23 denotes the holding circuit for maintaining the inhibited state of the two main switches MOS1 and MOS2.

The system according to Figure 7 differs from that shown in Figure 3 in that a timing circuit T1, T2 is provided between each magnetic pick-up P1, P2 and the control electrode G' of the SCR inhibiting the flow of the primary current, said timing circuit consisting of a re-triggerable, resettable, monostable precision multivibrator which allows a pulse of a predetermined length to be emitted so as to interrupt the spark or the current flowing in the windings L1 and L2 of the ignition coil, when a predetermined number of revolutions of the engine is reached.

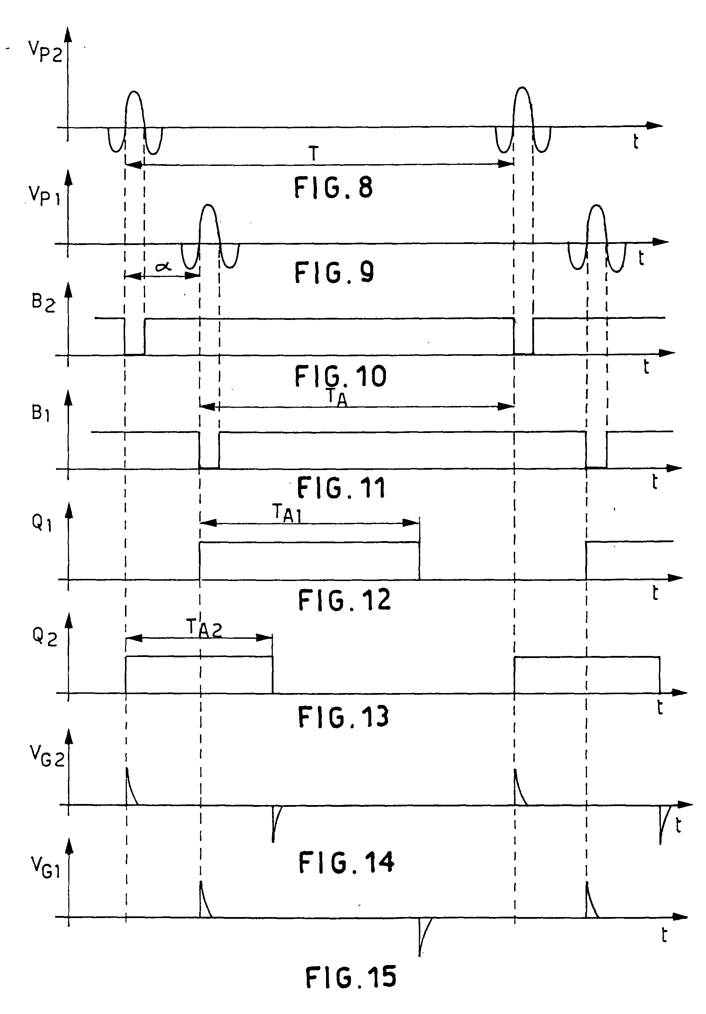

More particularly, from the wiring diagram of Figure 7, taking into account the graphs shown in Figures 8 to 15, it can be noted that T1 and T2 denote respectively the two re-triggerable monostable timers, for example consisting of a dual precision timer Motorola MC14538B, which act on the trailing edge of the signals at their inputs B1 and B2, respectively (Figures 10 and 11); in other words the non-inverted output Q1 and Q2 (Figures 12 and 13) will receive a pulse $T_{A1}$ and $T_{A2}$ of a predetermined length from the last trailing edge of the signal on the respective input B1 and B2. Therefore, if:

T denotes the period of rotation for the rotor 10 of the generator (Figure 8);

$T_A$ denotes the time length occurring between the two trailing edges of B1 and B2 (Figures 10 and 11);

$T_{A1}$ denotes the time of the re-triggerable monostable timer T1;

$T_{A2}$ denotes the time of the re-triggerable monostable T2 (Figures 12 and 13), and finally if:

$\overline{Q1}$ denotes the signal Q1 negated at the other output of T1;

the result is that the signal of the pick-up P1 sent to the base of the transistor J1 is squared by the latter and, via the resistor R7 supplied with the voltage $V_{DD}$ output from the capacitor C1, is sent to the inlet B1 of T1. At the same time, the output Q1 of the first timer is sent to the control electrode G' of SCR1 via a capacitor C3, while its negated output $\overline{Q1}$ is sent, via the resistor R9, to the base of a transistor J3 to short-circuit to earth the signal emitted by the output Q2 of the timer T2.

The signal of the pick-up P2 similarly is in turn squared by the transistor J2 and, via the resistor R8 still supplied with the voltage $V_{DD}$ output from the capacitor C1, is sent to the input B2 of the transistor J2. The non-inverted output Q2 of P2 is sent, via the capacitor C2, to the control electrode G' of SCR2; the diodes D4 and D5 have the function of discharging the capacitors C2 and C3 when Q1 and Q2 are low.

Normally the output $\overline{Q1}$ is high and therefore the transistor J3 is in the conductive state, preventing SCR2 in turn from being activated.

With the trailing edge of the signal present on B1, the output Q1 switches high for a time period $T_{A1}$ predetermined by T1 and thus SCR1 is activated via C3, preventing MOS1 from generating the spark on the spark plug CD with an advance controlled by the first pick-up P1. When Q1 switches high, $\overline{Q1}$ switches low so that J3 is inhibited for the whole of the time period $T_{A1}$. If, during this time period $T_{A1}$, Q2 switches high, then SCR2 may be activated, inhibiting MOS2 and causing the spark to be generated in synchronism with the pick-up P2.

Therefore, when the time $T_{A1}$ set by the timer $T_1$ exceeds the time $T_A$, depending upon the speed of rotation of the engine, there occurs a variation in the timing equivalent to the angle $\alpha$ determined by the two pick-ups P1 and P2. When the time $T_{A1}$ of $T_1$ exceeds the period T, then the output $Q_1$ no longer switches so that $Q_1$ is low, leaving the transistor J3 still inhibited and hence SCR2 can be actuated.

In this way it is possible to determine in a precise manner the instant at which shifting of the spark advance occurs, eliminating the influence of magnetization and that of other mechanical and thermal tolerances.

When the time $T_{A2}$ exceeds the period T, then the output Q2 of the second timer T2 does not change state and hence SCR2 is not actuated; correspondingly, MOS2 is not inhibited, so that no spark is produced on the spark plug CD.

In practice, the time $T_{A2}$ of $T_2$ determines the speed at which the spark is suppressed, thus forming a speed limiter for the engine. Normally shifting of the spark advance is performed at low speeds for example 3000 rpm, while speed limitation is performed for example at 12,000 rpm. During the limiting phase, the power supply is maintained by the capacitor $C_1$ since this situation is transient and of short duration.

The behaviour of the transistor J4 and the components connected to it is identical to that described above with reference to the diagram in Figure 3; in particular J4, after the instant when the spark is produced, remains in the conductive state, inhibiting MOS1 and MOS2 for the whole of the period during which L1 generates a voltage to polarize the base of J4. Figures 14 and 15 show the pulses at the control electrodes of the two inhibiting switches SCR1 and SCR2.

From the above description and illustrations with reference to the accompanying drawings it will therefore have been understood that it has been possible to provide an inductive-ignition system for internal-combustion engines with electronically controlled spark advance, by means of which the objects of the invention are achieved; it is understood, however, that the above description and illustrations have been provided purely by way of example and that other variations and modifications can be made to the various electrical diagrams, using equivalent solutions or components, without thereby departing from the innovative principles of the invention, as claimed.

**Claims**

1. An inductive ignition system for an internal combustion engine, comprising:

   - a voltage generator having a stator (12) provided with an electric circuit, and a rotor (10) actuated by the engine, the rotor (10) having a magnetic-pole system (N, S) interacting with the circuit of the stator (12);
   - an ignition coil (17, 18) on the stator (12), said ignition coil comprising a primary winding (17) linked to the magnetic flux of the pole-system (N, S) of the stator (12), and a secondary winding (18) which is inductively coupled to said primary winding (17), and respectively connected to a spark-plug (CD);
- a switch control device (MOS1, MOS2) to control the current flowing into the primary winding (17) of the ignition coil (17, 18);
- a control circuit (21, 22) for said switch control device (MOS1, MOS2) provided to allow and to inhibit the flow of the current in the primary winding (17) of the ignition coil (17, 18) to store magnetic energy, respectively to induce a high voltage in the secondary winding (18) of the ignition coil, causing the sparking of the combustion engine; and
- a voltage supply circuit (20) for said control circuit (21, 22),

caracterized in that said switch control device (MOS1, MOS2) comprises:

- first and second main electronic switches (MOS1, MOS2) branched from respective ends of the primary winding (17) of the ignition coil, each main electronic switch having a control electrode (G);
- the control circuit comprising first and second inhibiting circuits (21, 22) each connected to the control electrode (G) of a respective main electronic switch (MOS1, MOS2); each inhibiting circuit (21, 22) comprising a control switch (SCR1, SCR2) having a control electrode (G'), and a pick-up (P1, P2) connected to said control electrode (G') for picking-up a control signal from said ignition coil (17, 18) for triggering the corresponding main electronic switch (MOS1, MOS2);
- the pick-ups of the inhibiting circuits (21, 22) being arranged in the magnetic circuit of the stator (12) of the voltage generator, and being angularly spaced each other in the rotational direction of the rotor (10), to provide first and second spark-time advances during low running and a normal running of the engine, respectively of the engine; and
- a voltage holding circuit (23) connected to the control electrodes (G) of said main electronic switches (MOS1, MOS2) for maintaining the same at an inhibited condition during sparking of the engine.

2. An inductive ignition system according to Claim 1, in which the stator (12) comprises a magnetic circuit having a central leg (14) and two lateral legs (15, 16), **characterized in that** one of said pick-ups (P1, P2) is positioned close to the central leg (14) of the magnetic circuit of the stator (12), while the other one of the pick-ups (P1, P2) is positioned close to the lateral leg first occurring in the magnetic circuit of the rotor (10), in relation to its direction of rotation.

3. An inductive ignition system according to Claim 1 or 2, **characterized in that** the first occurring pick-up (P2) in the magnetic system of the rotor (10) comprises a winding having a number of turns smaller than that of the other pick-up (P1).

4. An inductive ignition system according to Claim 1, **characterized in that** said holding circuit (23) for maintaining the inhibited state of said main electronic switches (MOS1, MOS2) comprises an auxiliary control circuit (J4) for connecting to the earth the feed circuit (20) of the control electrodes (G) of the main switches (MOS1, MOS2), in which the control electrode (B) of said auxiliary control switch (J4) is supplied with a voltage signal from the primary winding (17) of the ignition coil (17, 18).

5. An inductive ignition system according to Claim 4, **characterized in that** the control electrode (B) of said auxiliary control switch (J4) for maintaining the inhibited state of the main switches (MOS1, MOS2) is connected to both ends of the primary winding (17) of the ignition coil (17, 18), via a voltage divider (R1, R2), a Zener diode (DZ1) and a diodes means (D1, D2), and in which said Zener diode (DZ1) has a voltage drop greater than the voltage drop inside each main electronic switch (MOS1, MOS2) in the conductive state of said main switches (MOS1, MOS2).

6. An inductive ignition system according to Claim 1, in which each of said main electronic switches (MOS1, MOS2) controlling the primary current is of MOS type.

7. An inductive ignition system according to Claim 1, **characterized in that** said feed circuit (20) supplying the polarization voltage for the control electrodes (G) of the main switches (MOS1, MOS2) comprises a capacitor (C1) arranged in parallel with a Zener diode (DZ2).

8. An inductive ignition system according to any one of the preceding claims, **characterized in that** the pick-up (P2) first occurring in the magnetic system of the rotor during its rotation, is connected to the control electrode (G) of the respective inhibiting switch (SCR2), via a Zener diode (DZ3), and a polarization resistor $R_{G'K}$, and **in that** said Zener diode (DZ3) has a Zener voltage variation according to the temperature, which is of opposite sign to that of the threshold voltage of the control electrode (G') of said auxiliary control switch (SCR2).

9. An inductive ignition system according to Claim 1, **characterized by** comprising limiting means, for limiting the revolutions of the engine by suppressing the spark at a predetermined running, wherein said limiting means for limiting the number of revolutions comprise a timing device (T1, T2) between each pick-up (P1, P2) and the control electrode (G') of the respective electronic inhibiting switch (SCR1, SCR2).

10. An inductive ignition system according to Claim 9, **characterized in that** each of said timing devices (T1, T2) comprise a first and a second re-triggerable, resettable, monostable multivibrator, and **in that** the first timing device (T1) is provided to control the speed at which the shifting of the ignition advance occurs, while the second timing device (T2) is provided to limit the rotational speed of the engine at which generation of the spark for the combustion occurs, each timing device (T1, T2) having inlet side connected to the respective pick-up (P1, P2) via a signal squaring circuit (J1, J2) as well as each having also a first logic outlet for a signal and a second logic outlet for a negated signal, each of said first logic outlet for the signals being connected via capacitor (C2, C3) to the control electrode (G') of the inhibiting switch (SCR1, SCR2) of said main electronic switches (MOS1, MOS2) and in which the outlet of the negated signal of one of said timing devices (T1) is connected to the base of a transistor (T3) for short-circuiting to earth the non-negated outlet of the other one of said timing devices (T2).

**Patentansprüche**

1. Induktives Zündsystem für eine Brennkraftmaschine, mit:

- einem Spannungsgenerator, der einen mit einer elektrischen Schaltung versehenen Stator (12) und einen durch den Motor betätigten Rotor (10) aufweist, wobei der Rotor (10) ein mit der Schaltung des Stators (12) in Wechselwirkung stehendes Magnetpolsystem (N, S) besitzt;
- einer Zündspule (17, 18) am Stator (12) wobei die Zündspule eine Primärwicklung (17), die mit dem magnetischen Fluß des Polsystems (N, S) des Stators (12) verbunden ist, und eine Sekundärwicklung (18), die mit der Primärwicklung (17) induktiv gekoppelt und mit einer entsprechenden Zündkerze (CD) verbunden ist, umfaßt;
- einer Schalter-Steuervorrichtung (MOS1, MOS2), die den in die Primärwicklung (17) der Zündspule (17, 18) fließenden Strom steuert;
- einer Steuerschaltung (21, 22) für die Schalter-Steuervorrichtung (MOS1, MOS2), die so beschaffen ist, daß sie den Fluß des Stroms in die Primärwicklung (17) der Zündspule (17, 18) zuläßt bzw. sperrt, um magnetische Energie zu speichern, um in der Sekundärwicklung (18) der Zündspule eine Hochspannung zu induzieren, die die Zündung der Brennkraftmaschine bewirkt; und
- einer Spannungsversorgungsschaltung (20) für die Steuerschaltung (21, 22),

   **dadurch gekennzeichnet, daß** die Schalter-Steuervorrichtung (MOS1, MOS2) umfaßt:

- erste und zweite elektronische Hauptschalter (MOS1, MOS2), die von entsprechenden Enden der Primärwicklung (17) der Zündspule abgezweigt sind, wobei jeder elektronische Hauptschalter eine Steuerelektrode (G) besitzt;
- wobei die Steuerschaltung erste und zweite Sperrschaltungen (21, 22) umfaßt, wovon jede mit der Steuerschaltung (G) eines entsprechenden elektronischen Hauptschalters (MOS1, MOS2) verbunden ist; wobei jede Sperrschaltung (21, 22) einen Steuerschalter (SCR1, SCR2) mit einer Steuerelektrode (G') und einen Aufnehmer (P1, P2), der mit der Steuerelektrode (G') verbunden ist, um ein Steuersignal von der Zündspule (17, 18) aufzunehmen, um den entsprechenden elektronischen Hauptschalter (MOS1, MOS2) zu triggern, umfaßt;
- wobei die Aufnehmer der Sperrschaltungen (21, 22) in der magnetischen Schaltung des Stators (12) des Spannungsgenerators angeordnet sind und in Drehrichtung des Rotors (10) um einen bestimmten Winkel voneinander beabstandet sind, um während eines langsamen Laufs und eines normalen Laufs des Motors erste bzw. zweite Zündzeitpunktvoreilungen des Motors zu erzeugen; und
- eine Spannungshalteschaltung (23), die mit den Steuerelektroden (G) der elektronischen Hauptschalter (MOS1, MOS2) verbunden ist, um diese während des Zündens des Motors in einem gesperrten Zustand zu halten.

2. Induktives Zündsystem nach Anspruch 1, in dem der Stator (12) einen Magnetkreis mit einem Mittelschenkel (14) und zwei seitlichen Schenkeln (15, 16) umfaßt, **dadurch gekennzeichnet, daß** einer der Aufnehmer (P1, P2) in der Nähe des mittleren Schenkels (14) des Magnetkreises des Stators (12) positioniert ist, während der andere der Aufnehmer (P1, P2) in der Nähe desjenigen seitlichen Schenkels, der in bezug auf die Drehrichtung des Rotors (10) in dem Magnetkreis des Rotors (10) als erstes auftritt, positioniert ist.

3. Induktives Zündsystem nach Anspruch 1 oder 2, **dadurch gekennzeichnet, daß** der in dem magnetischen System des Rotors (10) als erstes auftretende Aufnehmer (P2) eine Wicklung mit einer Windungsanzahl, die kleiner als jene des anderen Aufnehmers (P1) ist, umfaßt.

4. Induktives Zündsystem nach Anspruch 1, **dadurch gekennzeichnet, daß** die Halteschaltung (23) zum Halten des gesperrten Zustandes der elektronischen Hauptschalter (MOS1, MOS2) eine Hilfssteuerschaltung (J4) umfaßt, die die Speiseschaltung (20) der Steuerelektroden (G) der Hauptschalter (MOS1, MOS2) mit Erde verbindet, wobei die Steuerelektrode (B) des Hilfssteuerschalters (J4) mit einem Spannungssignal von der Primärwicklung (17) der Zündspule (17, 18) versorgt wird.

5. Induktives Zündsystem nach Anspruch 4, **dadurch gekennzeichnet, daß** die Steuerelektrode (B) des Hilfssteuerschalters (J4) zum Halten des gesperrten Zustandes der Hauptschalter (MOS1, MOS2) mit beiden Enden der Primärwicklung (17) der Zündspule (17, 18) über einen Spannungsteiler (R1, R2), eine Zener-Diode (DZ1) und ein Diodenmittel (D1, D2) verbunden ist, wobei die Zener-Diode (DZ1) einen Spannungsabfall aufweist, der größer als der Spannungsabfall in jedem elektronischen Hauptschalter (MOS1, MOS2) im leitenden Zustand der Hauptschalter (MOS1, MOS2) ist.

6. Induktives Zündsystem nach Anspruch 1, in dem jeder der elektronischen Hauptschalter (MOS1, MOS2), die den Primärstrom steuern, vom MOS-Typ ist.

7. Induktives Zündsystem nach Anspruch 1, **dadurch gekennzeichnet, daß** die Speiseschaltung (20), die die Vorspannung für die Steuerelektroden (G) der Hauptschalter (MOS1, MOS2) liefert, einen Kondensator (C1) umfaßt, der zu einer Zener-Diode (DZ2) parallelgeschaltet ist.

8. Induktives Zündsystem nach einem der vorhergehenden Ansprüche, **dadurch gekennzeichnet, daß** der in dem magnetischen System des Rotors während seiner Drehung als erstes auftretende Aufnehmer (P2) mit der Steuerelektrode (G) des entsprechenden Sperrschalters (SCR2) über eine Zener-Diode (DZ3) und einen Vorspannungswiderstand ($R_{G'K}$) verbunden ist und daß die Zener-Diode (DZ3) eine von der Temperatur abhängende Zenerspannungsänderung besitzt, die ein zu dem Vorzeichen der Schwellenspannung der Steuerelektrode (G') des Hilfssteuerschalters (SCR2) entgegengesetztes Vorzeichen besitzt.

9. Induktives Zündsystem nach Anspruch 1, **gekennzeichnet durch** Begrenzungsmittel, die die Drehzahl des Motors **durch** Unterdrücken des Funkens bei einem vorgegebenen Lauf begrenzen, wobei die Begrenzungsmittel zum Begrenzen der Drehzahl eine Zeitgebervorrichtung (T1, T2) zwischen jedem Aufnehmer (P1, P2) und der Steuerelektrode (G') des entsprechenden elektronischen Sperrschalters (SCR1, SCR2) umfassen.

10. Induktives Zündsystem nach Anspruch 9, **dadurch gekennzeichnet, daß** jede Zeitgebervorrichtung (T1, T2) eine erste und eine zweite nachtriggerbare, rücksetzbare monostabile Kippschaltung umfaßt, daß die erste Zeitgebervorrichtung (T1) so beschaffen ist, daß sie die Drehzahl steuert, bei der die Verschiebung der Zündvoreilung erfolgt, während die zweite Zeitgebervorrichtung (T2) so beschaffen ist, daß sie die Drehzahl des Motors begrenzt, bei der die Erzeugung des Funkens für die Verbrennung erfolgt, wobei jede Zeitgebervorrichtung (T1, T2) eine Eingangsseite, die über eine Signalquadrierungsschaltung (J1, J2) mit einem entsprechenden Aufnehmer (P1, P2) verbunden ist, sowie einen ersten logischen Ausgang für ein Signal und einen zweiten logischen Ausgang für ein negiertes Signal besitzt, wobei jeder der ersten logischen Ausgänge für die Signale über einen Kondensator (C2, C3) mit der Steuerelektrode (G') des Sperrschalters (SCR1, SCR2) der elektronischen Hauptschalter (MOS1, MOS2) verbunden ist und der Ausgang des negierten Signals einer der Zeitgebervorrichtungen (T1) mit der Basis eines Transistors (T3) verbunden ist, um den nicht negierten Ausgang der anderen der Zeitgebervorrichtungen (T2) mit Erde kurzzuschließen.

**Revendications**

1. Système d'allumage inductif pour moteur à combustion interne, comprenant

   - un générateur de tension comportant un stator (12) muni d'un circuit électrique, et un rotor (10) actionné par le moteur, le rotor (10) comportant un système à pôles magnétiques (N, S) qui interagit avec le circuit du stator (12);
   - une bobine d'allumage (17, 18) sur le stator (12), ladite bobine d'allumage comprenant un enroulement primaire (17) lié au flux magnétique du système à pôles (N, S) du stator (12), et un enroulement secondaire (18) qui est couplé de manière inductive audit enroulement primaire (17), et connecté respectivement à une bougie d'allumage (CD);
   - un dispositif de commande (MOS1, MOS2) d'interrupteur pour commander le courant circulant dans l'enroulement primaire (17) de la bobine d'allumage (17, 18);
   - un circuit de commande (21, 22) pour ledit dispositif de commande (MOS1, MOS2) d'interrupteur, prévu pour permettre et pour inhiber la circulation du courant dans l'enroulement primaire (17) de la bobine d'allumage (17, 18) pour stocker de l'énergie magnétique, respectivement pour induire une tension élevée dans l'enroulement secondaire (18) de la bobine d'allumage, provoquant l'allumage du moteur à combustion; et

- un circuit d'alimentation en tension (20) pour ledit circuit de commande (21, 22),

**caractérisé en ce que** ledit dispositif de commande (MOS1, MOS2) d'interrupteur comprend :

- un premier et un second interrupteur électronique principal (MOS1, MOS2) branchés sur des extrémités respectives de l'enroulement primaire (17) de la bobine d'allumage, chaque interrupteur électronique principal ayant une électrode de commande (G);
- le circuit de commande comprenant un premier et un second circuit d'inhibition (21, 22) reliés chacun à l'électrode de commande (G) d'un interrupteur électronique principal (MOS1, MOS2) respectif; chaque circuit d'inhibition (21, 22) comprenant un interrupteur de commande (SCR1, SCR2) ayant une électrode de commande (G'), et un capteur (P1, P2) relié à ladite électrode de commande (G') pour capter un signal de commande provenant de ladite bobine d'allumage (17, 18) pour déclencher l'interrupteur électronique principal (MOS1, MOS2) correspondant;
- les capteurs des circuits d'inhibition (21, 22) étant agencés dans le circuit magnétique du stator (12) du générateur de tension, et étant espacés angulairement les uns par rapport aux autres dans la direction de rotation du rotor (10), de façon à fournir une première et une seconde avance à l'allumage, respectivement pendant un régime lent et un régime normal du moteur; et
- un circuit de maintien (23) de tension relié aux électrodes de commande (G) desdits interrupteurs électroniques principaux (MOS1, MOS2) pour maintenir ces derniers dans un état inhibé pendant l'allumage du moteur.

2. Système d'allumage inductif selon la revendication 1, dans lequel le stator (12) comprend un circuit magnétique ayant une branche centrale (14) et deux branches latérales (15, 16), **caractérisé en ce que** l'un desdits capteurs (P1, P2) est positionné à proximité de la branche centrale (14) du circuit magnétique du stator (12), tandis que l'autre desdits capteurs (P1, P2) est positionné à proximité de la branche latérale qui se présente en premier dans le circuit magnétique du rotor (10), relativement à son sens de rotation.

3. Système d'allumage inductif selon la revendication 1 ou 2, **caractérisé en ce que** le premier capteur (P2) apparaissant dans le système magnétique du rotor (10) comprend un enroulement ayant un nombre de spires inférieur à celui de l'autre capteur (P1).

4. Système d'allumage inductif selon la revendication 1, **caractérisé en ce que** ledit circuit de maintien (23) servant à maintenir l'état inhibé desdits interrupteurs électroniques principaux (MOS1, MOS2) comprend un circuit de commande auxiliaire (J4) servant à relier à la terre le circuit d'alimentation (20) des électrodes de commande (G) des interrupteurs principaux (MOS1, MOS2), l'électrode de commande (B) dudit interrupteur de commande auxiliaire (J4) recevant un signal de tension provenant de l'enroulement primaire (17) de la bobine d'allumage (17, 18).

5. Système d'allumage inductif selon la revendication 4, **caractérisé en ce que** l'électrode de commande (B) dudit interrupteur de commande auxiliaire (J4) servant à maintenir l'état inhibé des interrupteurs principaux (MOS1, MOS2) est reliée aux deux extrémités de l'enroulement primaire (17) de la bobine d'allumage (17, 18), via un diviseur de tension (R1, R2), une diode Zener (DZ1) et un moyen à diodes (D1, D2), et dans lequel ladite diode Zener (DZ1) a une chute de tension supérieure à la chute de tension de chaque interrupteur électronique principal (MOS1, MOS2) dans l'état conducteur desdits interrupteurs principaux (MOS1, MOS2).

6. Système d'allumage inductif selon la revendication 1, dans lequel chacun desdits interrupteurs électroniques principaux (MOS1, MOS2) commandant le courant primaire est de type MOS.

7. Système d'allumage inductif selon la revendication 1, **caractérisé en ce que** ledit circuit d'alimentation (20) fournissant la tension de polarisation servant aux électrodes de commande (G) des interrupteurs principaux (MOS1, MOS2) comprend un condensateur (C1) monté en parallèle avec une diode Zener (DZ2).

8. Système d'allumage inductif selon l'une quelconque des revendications précédentes, **caractérisé en ce que** le capteur (P2) qui apparaît en premier dans le système magnétique du rotor pendant sa rotation est connecté à l'électrode de commande (G) de l'interrupteur d'inhibition respectif (SCR2), via une diode Zener (DZ3) et une résistance de polarisation $R_{G'K}$, et **en ce que** ladite diode Zener (DZ3) présente une variation de tension de Zener selon la température qui est de signe contraire à celui de la tension seuil de l'électrode de commande (G') dudit interrupteur de commande auxiliaire (SCR2).

9. Système d'allumage inductif selon la revendication 1, **caractérisé par le fait qu'**il comprend un moyen de limitation servant à limiter le nombre de révolutions du moteur en supprimant l'étincelle à un régime prédéterminé, dans lequel ledit moyen de limitation servant à limiter le nombre de révolutions comprend un dispositif de synchronisation (T1, T2) entre chaque capteur (P1, P2) et l'électrode de commande (G') de l'interrupteur électronique d'inhibition respectif (SCR1, SCR2).

10. Système d'allumage inductif selon la revendication 9, **caractérisé en ce que** chacun desdits dispositifs de synchronisation (T1, T2) comprend un premier et un second multivibrateur monostable redéclenchable et réinitialisable, et **en ce que** le premier dispositif de synchronisation (T1) est prévu pour commander la vitesse à laquelle se produit le décalage de l'avance à l'allumage, tandis que le second dispositif de synchronisation (T2) est prévu pour limiter la vitesse de rotation du moteur à laquelle se produit la génération de l'étincelle pour la combustion, chaque dispositif de synchronisation (T1, T2) ayant son entrée reliée au capteur respectif (P1, P2) via un circuit de mise au carré (J1, J2) de signaux, ainsi qu'une première sortie logique pour un signal et une seconde sortie logique pour un signal inversé, chacune desdites premières sorties logiques pour les signaux étant reliée via un condensateur (C2, C3) à l'électrode de commande (G') de l'interrupteur d'inhibition (SCR1, SCR2) desdits interrupteurs électroniques principaux (MOS1, MOS2) et dans lequel la sortie du signal inversé de l'un desdits dispositifs de synchronisation (T1) est reliée à la base d'un transistor (T3) pour court-circuiter à la terre la sortie non inversée de l'autre desdits dispositifs de synchronisation (T2).

FIG. 1

FIG. 2

FIG. 6

FIG. 3

FIG. 4

FIG. 5

FIG.7

FIG.8

FIG.9

FIG.10

FIG.11

FIG.12

FIG.13

FIG.14

FIG.15